# EUROPÄISCHE PATENTSCHRIFT

(11) **EP 2 531 318 B1**
(45) Veröffentlichungstag und Bekanntmachung des Hinweises auf die Patenterteilung: **24.09.2014**
(21) Anmeldenummer: 11717983.8
(22) Anmeldetag: 19.04.2011
(51) Int. Cl.: B23K 7/10, B23K 7/00, F23D 14/46, B23K 9/013, B23K 26/14

(54) **VERSCHLEIßERKENNUNGSSYSTEM FÜR EINE SCHNEIDDÜSE AN EINEM SCHNEIDBRENNER ZUM SCHNEIDEN VON STAHLWERKSTÜCKEN UND SCHNEIDBRENNER MIT DEM VERSCHLEIßERKENNUNGSSYSTEM**
WEAR DETECTION SYSTEM FOR A CUTTING NOZZLE ON A CUTTING TORCH FOR CUTTING STEEL WORKPIECES AND CUTTING TORCH WITH THE WEAR DETECTION SYSTEM
SYSTÈME DE DÉTECTION D'USURE POUR UNE BUSE DE COUPE D'UN DISPOSITIF D'OXYCOUPAGE DESTINÉ À DÉCOUPER DES PIÈCES EN ACIER ET DISPOSITIF D'OXYCOUPAGE AVEC CE SYSTÈME DE DÉTECTION

(43) Veröffentlichungstag der Anmeldung: 12.12.2012
(73) Patentinhaber: GeGa Lotz GmbH, 65719 Hofheim-Wallau (DE)
(72) Erfinder: DEICA, Alexander, 65510 Hünstetten (DE); BUHR, Wigbert, 56593 Horhausen (DE)
(74) Vertreter: Aue, Hans-Peter
(86) Internationale Anmeldenummer: PCT/EP2011/056188
(87) Internationale Veröffentlichungsnummer: WO 2012/143042

(56) Entgegenhaltungen:
- EP-A1- 1 211 015
- WO-A1-2008/031132
- US-A- 5 717 187

## Beschreibung

Die Erfindung bezieht sich auf ein Verfahren und einen Schneidbrenner mit einer Vorrichtung zum Erkennen des Verschleißes einer Schneiddüse am Schneidbrenner zum Schneiden von Stahlwerkstücken, insbesondere von Brammen, Blöcken und Knüppeln.

Schneidbrenner sind zum Schneiden von Stahlwerkstücken und Werkstücken aus Eisenlegierungen vorgesehen. Dabei wird die aus einem Strahl von Sauerstoff und Schneidgas entzündete Flamme des Schneidbrenners auf die Oberfläche des zu schneidenden Metalls gelenkt. Das Metall wird dadurch auf dessen Zündtemperatur erhitzt, wobei ein Strahl von Schneidsauerstoff das erhitzte Metall oxidiert, um den Schnitt zu bewirken. Dabei fängt das Werkstück an zu brennen und bildet eine Fuge, die sich zu einem Schnitt verlängert, wenn der Strahl weiterläuft. Da dabei noch Wärme entsteht, wird dieses Schneidbrennen als autogen bezeichnet, d.h. es erfolgt eine weitere Vorheizung der nächsten Stahlschichten der zu schneidenden Stelle aus der Temperatur, die aus dem verbrennenden Stahl gewonnen wird.

Üblicherweise sammeln sich an der Schneiddüse Verunreinigungen, wie Schlacke-, Staub- und Schmutzpartikel, an und dringen in die Düse ein, wodurch die Lebensdauer der Schneiddüse verringert wird und diese mehr oder weniger stark verschleißt. Die Schwankung des Verschleißes ist vom Einsatzzweck und den Einsatzbedingungen der Schneiddüse abhängig.

Aus der WO 2008/031132 A1 ist ein Verfahren zur Verschleißerkennung bei einem Wasserdampfplasmabrenner bekannt, bei dem ein Durchflusssensor in der Versorgungsleitung der Flüssigkeit zum Erkennen des Verschleißes einer Schneiddüse verwendet wird.

Die EP 1 211 015 A1 zeigt eine Verschleisskontroll-Einrichtung für Schneiddüsen von Laserschneidmaschinen mittels einer Kameraeinheit zum Erkennen des Verschleißes einer Schneiddüse.

Weiterhin offenbart die US 5 717 197 A die Überwachung des Plasmagasdruckes und der Spannung zwischen Elektrode und Düse bei einem Plasmaschneidverfahren zum Erkennen des Verschleißes einer Schneiddüse.

Es ist Aufgabe der Erfindung, ein Verschleißerkennungssystem zu schaffen, um den Verschleiß der Schneiddüse am Schneidbrenner, ohne diese ausbauen zu müssen, zu prüfen und somit rechtzeitig und falls notwendig, eine neue Schneiddüse einzubauen, um Störungen im nachfolgenden Produktionsprozess zu vermeiden.

Verfahrensgemäß wird die Aufgabe dadurch gelöst, dass in der Zuleitung des Heizgasanschlusses zum Schneidbrenner eine Abzweigleitung abgeht, in die nach dem Schließen der Medienventile für Heizgas, Schneidsauerstoff und Heizsauerstoff ein neutrales Medium mit einem bestimmten Druck durch die Schneiddüse geblasen wird, wobei dieser Vorgang einmal beim Einbau einer neuen Schneiddüse durchgeführt wird, um diese zu kalibrieren, und danach in bestimmten Intervallen, die vom Einsatz der Schneiddüse abhängen, dieser Vorgang erneut durchgeführt wird, um den Verschleißzustand der Schneiddüse zu ermitteln und zu speichern und beim Überschreiten einer vorbestimmten maximal zulässigen Mengenabweichung des eingeblasenen Mediums ein optisches und/oder akustisches Signal zu erzeugen.

Bevorzugt ist das in die Abzweigleitung einzublasende Medium Stickstoff, so dass die Druckversorgung der Abzweigleitung mittels Stickstoff erfolgt.

Durch das erfindungsgemäße Verschleißerkennungssystem kann jederzeit der aktuelle Verschleißstatus der Schneiddüse, ausgehend von der Schneiddüse im Neuzustand, ermittelt und gespeichert und bei Überschreiten einer maximal zulässigen Verschleißabweichung, ein Signal abgegeben werden, um gegebenenfalls rechtzeitig die Schneiddüse gegen eine neue auszutauschen. Dabei ist es nicht notwendig, die Schneiddüse am Schneidbrenner auszubauen, denn der Schneiddüsentest läuft nur über die Heizgasleitung.

Weiterhin ist vorgesehen, dass der Druck für das einzublasende Medium während des Einblasvorganges konstant gehalten und dessen Temperatur berücksichtigt wird. Dabei lässtdie damit ermittelbare Mengenabweichung Rückschlüsse auf den Zustand der Schneiddüse zu.

Der Ablauf des Schneiddüsentests zum Erkennen des Verschleißes einer Schneiddüse an einem Schneidbrenner ist wie folgt:
1. Die neue Schneiddüse wird in den Schneidbrenner eingeschraubt.
2. Der Mengendurchfluss des eingeblasenen Mediums (Stickstoff) wird gemessen und als Referenzwert gespeichert. Damit ist die Schneiddüse kalibriert.
3. Zumindest einmal pro Tag wird die Durchflussmengenmessung wiederholt und das Messergebnis mit dem gespeicherten Referenzwert verglichen.
4. Übersteigt die gemessene Abweichung den festgelegten und gespeicherten Referenzwert, sollte die Schneiddüse ausgetauscht werden.

Vorrichtungsgemäß wird die Aufgabe dadurch gelöst, dass in den Zuleitungen für Heizgas und Heizsauerstoff jeweils ein Massenstromventil eingebaut ist und in der Zuleitung für Heizgas zum Schneidbrenner eine Abzweigleitung für ein einzublasendes Medium, vorzugsweise Stickstoff, ausgebildet ist, die zumindest eine Messstrecke mit Auswerteeinheit, einen Vorregler zum Reduzieren des Eingangsdruckes des einzublasenden Mediums auf einen bestimmten Arbeitsdruck in der Messstrecke und einen Präzisionsdruckregler zur Konstanthaltung des Druckes des eingeblasenden Mediums in der Messstrecke aufweist.

Vorzugsweise zweigt die Abzweigleitung von der Zuleitung des Heizgasanschlusses zum Schneidbrenner mittels eines T-Stücks ab.

Des Weiteren besteht die Messstrecke aus einem Präzisions-, vorzugsweise einem Coriolis-Durchflussmengenmessgerät und einem Temperaturaufnehmer. Somit kann die durchfließende Menge des eingeblasenen Mediums sehr genau und temperaturbedingt gemessen werden. Der Präzisionsregler sorgt dafür, dass der Druck vor der Schneiddüse sehr genau eingehalten wird, da bereits kleine Druckabweichungen vom Messdruck Auswirkungen auf das Messergebnis haben.

Der Vorregler reduziert den Eingangsdruck vom Stickstoff auf einen bestimmten Arbeitsdruck der Messstrecke, beispielsweise 6 bar.

Weiterhin ist zumindest das Massenstromventil für Heizgas mit einem abschaltbaren Bypass versehen, um die Gaszufuhr während des Schneiddüsentests komplett zu trennen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

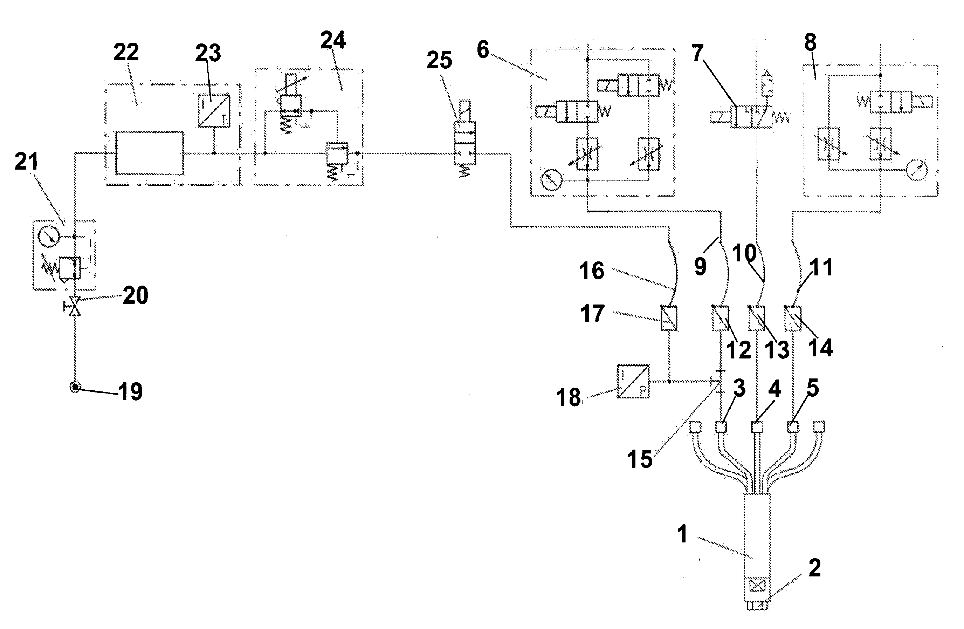

Der der Erfindung zugrunde liegende Gedanke wird in der nachfolgenden Beschreibung anhand eines Ausführungsbeispieles, das in der einzigen Zeichnung dargestellt ist, näher beschrieben.

Ein Schneidbrenner 1 ist mit einer Schneiddüse 2 versehen und besitzt Anschlüsse für Heizgas 3, Schneidsauerstoff 4 und Heizsauerstoff 5. Die Zufuhr zum Schneidbrenner 1 erfolgt mittels Massenstromventilen von Heizgas 6, Schneidsauerstoff 7 und gegebenenfalls Heizsauerstoff 8 über Schlauchzuleitungen 9, 10, 11, in die jeweils eine Rücktrittsicherung 12, 13, 14 eingebaut ist.

Von der Zuleitung 12 für Heizgas ist ein T-Stück 15 eingesetzt, welches eine Abzweigleitung 16 zur Verfügung stellt, in die zunächst ein Druckaufnehmer 17 und eine Rücktrittsicherung 18 eingebaut sind.

Am anderen Ende der Abzweigleitung 16 ist ein Anschluss 19 für ein in diese einzublasendes Medium, nämlich Stickstoff, vorgesehen, dessen Weg durch einen Kugelhahn 20 freigegeben bzw. gesperrt wird. Ein Vorregler 21 in der Abzweigleitung reduziert den Eingangsdruck des Stickstoffs auf einen Arbeitsdruck in der nachfolgend angeordneten Messstrecke 22 mit Auswerteeinheit und einem Temperaturaufnehmer 23.

Der als Coriolis-Durchflussmengenmessgerät ausgebildeten Messstrecke 22 ist ein Präzisionsdruckregler 24 nachgeordnet, der dafür sorgt, dass der Druck in der Abzweigleitung 16 vor der Schneiddüse 2 während des Schneiddüsentests mittels Stickstoff sehr genau eingehalten wird. Des Weiteren ist dem Präzisionsdruckregler 24 ein 2/2-Wege-Magnetventil 25 nachgeordnet.

### Liste der Bezugszeichen

- 1: Schneidbrenner
- 2: Schneiddüse
- 3: Anschluss Heizgas
- 4: Anschluss Schneidsauerstoff
- 5: Anschluss Heizsauerstoff
- 6: Massenstromventil Heizgas
- 7: Massenstromventil Schneidsauerstoff
- 8: Massenstromventil Heizsauerstoff
- 9: Zuleitung Heizgas
- 10: Zuleitung Schneidsauerstoff
- 11: Zuleitung Heizsauerstoff
- 12: Rücktrittsicherung Heizgas
- 13: Rücktrittsicherung Schneidsauerstoff
- 14: Rücktrittsicherung Heizsauerstoff
- 15: T-Stück
- 16: Abzweigleitung
- 17: Rücktrittsicherung Abzweigleitung
- 18: Druckaufnehmer
- 19: Medienanschluss
- 20: Kugelhahn
- 21: Vorregler
- 22: Messstrecke
- 23: Temperaturaufnehmer
- 24: Präzisionsdruckregler
- 25: 2/2-Wege-Magnetventil

## Patentansprüche

1. Verfahren zum Erkennen des Verschleißes einer Schneiddüse (2) an einem Schneidbrenner (1) zum Schneiden von Stahlwerkstücken, insbesondere von Brammen, Blöcken und Knüppeln, **dadurch gekennzeichnet, dass** in der Zuleitung (9) des Heizgasanschlusses (3) zum Schneidbrenner (1) eine Abzweigleitung (16) abgeht, in die nach dem Schließen der Medienventile (6,7,8) für Heizgas, Schneidsauerstoff und Heizsauerstoff ein neutrales Medium mit einem bestimmten Druck durch die Schneiddüse (2) geblasen wird, wobei dieser Vorgang einmal beim Einbau einer neuen Schneiddüse (2) durchgeführt wird, wobei der Mengendurchfluss der eingeblasenen Medium gemessen wird, um diese zu kalibrieren, und danach in bestimmten Intervallen, die vom Einsatz der Schneiddüse (2) abhängen, dieser Vorgang erneut durchgeführt wird, um den Verschleißzustand der Schneiddüse (2) zu ermitteln und zu speichern und beim Überschreiten einer vorbestimmten maximal zulässigen Mengenabweichung des eingeblasenen Mediums ein optisches und/oder akustisches Signal zu erzeugen.

2. Verfahren nach Anspruch 1, **dadurch gekennzeichnet, dass** das in die Abzweigleitung (16) einzublasende Medium Stickstoff ist.

3. Verfahren nach Anspruch 1, **dadurch gekennzeichnet, dass** der Druck für das einzublasende Medium wäh-rend des Einblasvorganges konstant gehalten und dessen Temperatur berücksichtigt wird.

4. Schneidbrenner (1) mit einer Vorrichtung zum Erkennen des Verschleißes einer Schneiddüse (2) am Schneidbrenner (1) zum Schneiden von Stahlwerkstücken, insbesondere von Brammen, Blöcken und Knüppeln, **dadurch gekennzeichnet, dass** in den Zuleitungen (9,11) für Heizgas und Heizsauerstoff jeweils ein Massenstromventil (6,8) eingebaut ist und in der Zuleitung (9) für Heizgas zum Schneidbrenner (1) eine Abzweigleitung (16) für ein einzublasendes Medium, vorzugsweise Stickstoff, ausgebildet ist, die zumindest eine Messstrecke (22) mit Auswerteeinheit zum Messen des Mengendurchflusses, einen Vorregler (21) zum Reduzieren des Eingangsdruckes des einzublasenden Mediums auf einen bestimmten Arbeitsdruck in der Messstrecke (22) und einen Präzisionsdruckregler (24) zur Konstanthaltung des Druckes des eingeblasenden Mediums in der Messstrecke (22) aufweist.

5. Vorrichtung nach Anspruch 4, **dadurch gekennzeichnet, dass** die Abzweigleitung (16) von der Zuleitung (9) des Heizgasanschlusses (3) zum Schneidbrenner (1) mittels eines T-Stücks (15) abzweigt.

6. Vorrichtung nach Anspruch 4, **dadurch gekennzeichnet, dass** die Messstrecke (22) aus einem Präzisions-, vorzugsweise einem Coriolis-Durchflussmengenmessgerät und einem Temperaturaufnehmer (23) besteht.

7. Vorrichtung nach Anspruch 4, **dadurch gekennzeichnet, dass** zumindest das Massenstromventil (6) für Heizgas mit einem abschaltbaren Bypass versehen ist.

## Claims

1. A method for detecting the wear of a cutting nozzle (2) on a cutting torch (1) for cutting steel workpieces, in particular von slabs, ingots and billets, **characterised in that** a branch line (16) exits to the cutting torch (1) in the feed line (9) of the hot gas connection (3), into which branch line a neutral medium with a set pressure is blown through the cutting nozzle after closing the medium valves (6,7,8) for hot gas, cutting oxygen and hot oxygen, whereas said process is carried once when installing a new cutting nozzle (2), whereas the mass flow rate of the medium blown in is measured, for the calibration thereof, and thereafter said process is performed again at set intervals, depending on the usage of the cutting nozzle (2), in order to determine and to store in memory the wear condition of the cutting nozzle (2) and to generate an optical and/or acoustic signal in case a predetermined maximum admissible deviation amount of the medium blown in has been exceeded.

2. The method according of claim 1, **characterised in that** the medium to be blown into the branch line (16) is nitrogen.

3. The method according to claim 1, **characterised in that** the pressure for the medium to be blown in during the blow-in process is maintained constant and its temperature is taken into account.

4. A cutting torch (1) with a device for detecting the wear of a cutting nozzle (2) on a cutting torch (1) for cutting steel workpieces, in particular von slabs, ingots and billets, **characterised in that** a mass flow valve (6,8) is incorporated in the feed lines (9,11) for hot gas and hot oxygen and a branch line (16) for a medium to be blown in, preferably nitrogen, is formed in the feed line (9) for hot gas leading to the cutting torch (1), a branch line which includes at least one measuring distance (22) with an interpreting unit for measuring the mass flow rate, a pre-regulator (21) for reducing the inlet pressure of the medium to be blown in down to a set work pressure in the measuring distance (22) and a precision pressure regulator (24) for maintaining constant the pressure of the medium of the medium to be blown in inside the measuring distance (22).

5. The device according to claim 4, **characterised in that** the branch line (16) branches off from the feed line (9) of the hot gas connection (3) to the cutting torch (1) by means of a T piece (15).

6. The device according to claim 4, **characterised in that** the measuring section (22) consists of a precision, preferably a Coriolis flow measuring device and a temperature sensor (23).

7. The device according to claim 4, **characterised in that** at least the mass flow valve (6) for hot gas is provided with a disconnectable by-pass.

## Revendications

1. Méthode de détection d'usure pour une buse de coupe (2) sur un dispositif d'oxycoupage (1) destiné à découper des pièces en acier, en particulier de brames, lingots et billettes, **caractérisé en ce qu'**une conduite de dérivation (16) part dans la conduite d'arrivée (9) du raccord de gaz chaud (3) vers le dispositif d'oxycoupage (1), conduite de dérivation dans laquelle un fluide neutre est injecté avec une pression déterminée à travers la buse de coupe (2) après la fermeture des valves de fluide (6, 7, 8) pour gaz chaud, oxygène de coupe et oxygène chaud, lequel cycle est effectué une fois lors de l'intégration d'une buse de coupe neuve (2), où l'on mesure le débit massique du fluide injecté, pour calibrer ladite buse, et le cycle est effectué une fois de plus selon des intervalles définis, liés à l'utilisation de la buse de coupe (2), pour déterminer et mémoriser le niveau d'usure de la buse de coupe (2) et ainsi générer un signal optique et/ou acoustique en cas de dépassement d'un écart quantitatif maximal admissible prédéterminé.

2. Méthode selon la revendication 1, **caractérisé en ce que** le fluide à injecter dans la conduite de dérivation (16) est l'azote.

3. Méthode selon la revendication 1, **caractérisé en ce que** la pression pour le fluide à injecter pendant le cycle d'injection est maintenue constante et que sa température est prise en compte.

4. Dispositif d'oxycoupage (1) muni d'un système de détection d'usure pour une buse de coupe (2) sur un dispositif d'oxycoupage (1) destiné à découper des pièces en acier, en particulier de brames, lingots et billettes, **caractérisé en ce qu'**une valve de débit massique (6, 8) est intégrée dans les conduites d'arrivée (9, 11) pour gaz chaud et oxygène chaud et une conduite de dérivation (16) pour fluide à injecter, de préférence de l'azote, est prévu dans la conduite d'arrivée (9) pour gaz chaud en direction du dispositif de coupe (1), conduite de dérivation présentant au moins une distance de mesure (22) pourvue d'une unité d'interprétation du débit massique, un prérégulateur (21) permettant de réduire la pression d'entrée du fluide à injecter à une pression de travail définie dans la distance de mesure (22) et un régulateur de pression de précision (24) pour maintenir constante la pression du fluide à injecter dans la distance de mesure (22).

5. Dispositif selon la revendication 4, **caractérisé en ce que** la conduite de dérivation (16) part de la conduite d'arrivée (9) du raccord de gaz chaud (3) vers le dispositif d'oxycoupage (1) à l'aide d'une pièce en T (15).

6. Dispositif selon la revendication 4, **caractérisé en ce que** la distance de mesure (22) se compose d'un appareil de mesure de débit massique de précision, de préférence un Coriolis, et d'un capteur de température (23).

7. Dispositif selon la revendication 4, **caractérisé en ce qu'**au moins la valve de débit massique (6) pour gaz chaud est pourvue d'une dérivation interrup-tible.
